(19) Europäisches Patentamt
European Patent Office
Office européen des brevets

(11) EP 2 840 693 B1

(12) **EUROPEAN PATENT SPECIFICATION**

(45) Date of publication and mention
of the grant of the patent:
**15.12.2021 Bulletin 2021/50**

(21) Application number: **14181992.0**

(22) Date of filing: **22.08.2014**

(51) Int Cl.:
$H02M\ 1/32$ (2007.01)    $H02M\ 7/219$ (2006.01)
$H05B\ 45/48$ (2020.01)    $H02M\ 1/36$ (2007.01)
$H05B\ 45/3725$ (2020.01)

(54) **Three-phase power supply and system of LEDs with three-phase power supply**

Dreiphasige Stromversorgung und LED-System mit dreiphasiger Stromversorgung

Alimentation électrique triphasée et système de DEL avec alimentation triphasée

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.08.2013 PL 40512813**

(43) Date of publication of application:
**25.02.2015 Bulletin 2015/09**

(73) Proprietor: **MILOO-ELECTRONICS Spolka z
ograniczona
odpowiedzialnoscia
32-720 Nowy Wisnicz (PL)**

(72) Inventors:
• **Wlodarczyk, Milosz**
**32-700 Bochnia (PL)**
• **Kolaszewski, Lukasz**
**02-359 Warszawa (PL)**
• **Brzegowy, Rafal**
**32-722 Krolowka (PL)**

(74) Representative: **Hudy, Ludwik
Kancelaria Patentowa Patelha
Czernichow 4
32-070 Czernichow, Krakow (PL)**

(56) References cited:
EP-A2- 1 347 564        US-A- 6 016 084
US-A1- 2001 035 799     US-A1- 2009 230 883
US-A1- 2010 123 403     US-A1- 2010 308 739
US-A1- 2012 104 952     US-A1- 2013 026 931
US-A1- 2013 207 557

• **Xingcun Colin Tong: "7 Board-Level Shielding
Materials and Components" In: "Advanced
Materials and Design for Electromagnetic
Interference Shielding", 2008, CRC Press, U.S.A.,
XP055208588, ISBN: 978-1-42-007359-1 pages
177-213, DOI:
http://dx.doi.org/10.1201/9781420073591, * the
whole document ***
• **Michel Mardiguian: "Design for ESD Immunity"
In: "Electro Static Discharge : Understand,
Simulate, and Fix ESD Problems", 24 September
2009 (2009-09-24), Wiley, U.S.A., XP055485729,
ISBN: 978-0-470-39704-6 pages 148-190,**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The subject matter of the invention is an LED system according to claim 1.

The growing demand for energy, including electric energy, forces the use of new cost-effective solutions, including in the area of illuminating rooms, which should be characterised by low power loss and high luminous efficiency. The most well known of these use LEDs, whose luminous efficiency exceeds even 100 lm/W, as a light source.

International application WO 2011014450 A titled "Three-phase led power supply" discloses a three-phase rectifier, supplying LED system.

Application US 2010164409 A1 titled "Integrally formed light emitting diode light wire and uses thereof" discloses LEDs wire having LED modules consisting of a number of LEDs and a microprocessor with ports, which control the operation of the LEDs.

Moreover, international application WO 2012142495 A1 titled "Multiple stage sequential current regulator" discloses a controller for LED circuits to control a number of LED segments supplied by a rectified AC source. Each of the control elements has two ends; one end of which is connected to the rectified AC source, and the other end is connected to other ends of each segment of LEDs connected in series.

Application US 20130181646 A1 titled "Three-phase AC to DC converter and air conditioning apparatus using three-phase AC to DC converter" discloses a three-phase AC to DC converter having a three-phase AC power supply.

International application WO 2013011422 A1 titled "Light source comprising an LED strip" discloses an elongated board with LEDs, which is supplied by a DC source and comprises connected together parallel LED systems, connected in series.

Publication of Patent Application EP1347564 A2 titled "Mosgate device driver for synchronous rectification of a 3 phase sinusoidal source" pertains to a rectifying circuit and method to produce a DC output by rectifying a sinusoidal source having a plurality of output phase voltages and a plurality of phase-to-phase voltages. The rectifying circuit includes a bridge circuit having a plurality of switches and is coupled to the output phasic voltages. The rectifying circuit has a control circuit coupled to the output phase voltages and to the bridge circuit. The control circuit is configured to control the switches in accordance with respective absolute values of the phase-to-phase voltages whereas the output phase voltages are rectified to produce the DC output. When the sinusoidal source is inductive, switch turn-off may be timed to provide synchronous rectification related to estimates of source periodicity.

Publication titled "7 Board-Level Shielding Materials and Components" (Xingcun Colin Tong), "Advanced Materials and Design for Electromagnetic Interference Shielding", CRC Press, USA, discloses board-level-type shields designed and used to eliminate EMI radiation from entering or exiting sections of a PCB, especially their construction.

In turn Publication of US Patent Application US 2013/026931 A1 titled "LED luminescence apparatus and method of driving the same" describes an LED luminescence apparatus which comprises a plurality of LED units connected in series configured to receive a unidirectional ripple voltage and a plurality of switch units. One end of each switch unit being connected to the cathode of one of the plurality of LED units, a plurality of constant current control circuit units, one end of each being connected to an another end of a respective switch unit to receive a current from the respective switch unit, each of the constant current control circuit units being configured to output a current control signal to the respective switch unit to control a magnitude of the received current to have a specific value. Furthermore, the LED luminescence apparatus has a current comparison unit to receive currents flowing from the plurality of switching units and to generate a plurality of switching control signals for the respective switch units to sequentially drive the plurality of constant current control circuit units.

Another system with LEDs is shown in Publication of US Patent Application US 2010/308739 A1 titled "Apparatus, method and system for providing AC line power to lighting devices". An exemplary apparatus comprises: a plurality of LEDs coupled in series to form a first plurality of segments of LEDs, a plurality of switches coupled to the plurality of segments of LEDs to switch a selected segment into or out of a series LED current path in response to a control signal, a memory and a controller which, in response to a first parameter and during a first part of an AC voltage interval, determines and stores in the memory a value of a second parameter and generates a first control signal to switch a corresponding segment of LEDs into the series LED current path. During a second part of the AC voltage interval, when a current value of the second parameter is substantially equal to the stored value, the controller generates a second control signal to switch a corresponding segment of LEDs out of the first series LED current path.

Publication of US Patent Application US 2013/207557 A1 titled "Light-emitting diode driving circuit for lighting" relates to a light-emitting diode (LED) driving circuit for lighting, which divides a specific pattern of driving data for a number of sections within one period or a half period of driving power, stores the divided data in a driving data storage device, and drives LEDs connected in series in an LED array unit using the driving data so as to drive the LEDs with high efficiency, a high power factor, and low total harmonic distortion (HTD).

Another US Patent Application US 2009/230883 A1 titled "Stacked LED Controllers" describes a driver for driving a plurality of light emitting diodes (LEDs) which is formed of a plurality of LED controllers connected in series between a power supply and a reference voltage. Each controller drives one or more LEDs directly connected to it. Each controller has a voltage input terminal coupled to an output terminal of an adjacent upstream controller, and an output terminal coupled to the voltage input terminal of an adjacent downstream controller. Each controller has a normally-on bypass switch coupled between its voltage input terminal and the voltage input terminal of the adjacent upstream controller. The bypass switch completely bypasses the adjacent upstream controller when the adjacent downstream controller detects that its input voltage is below a threshold insufficient to drive the LED in the adjacent upstream controller. The mentioned bypass switch is turned off if the voltage is above the threshold.

US Patent Application US 2012/104952 A1 titled "Driving circuit for cascade light emitting diodes" shows a driving circuit which includes a power module, a plurality of LED modules and a constant current component. Each LED module includes a bypass circuit and at least one light emitting diode. The light emitting diode is serially connected between a first end and a second end of the bypass circuit. The first end of each bypass circuit is coupled to the power module or a third end of an adjacent upstream bypass circuit for serially connecting the constant current component electrically, thereby achieving the illumination of different total numbers of LED units in accordance with various voltage changes, and cascade light emitting diodes having increased power efficiency.

US Patent Application US 2010/123403 A1 "Electronic control to regulate power for solid-state lighting and methods thereof" relates to apparatus and methods to regulate an input power applied to a plurality of light emitters are provided. A regulator device includes a plurality of switches and a control circuit that controls the plurality of switches. The plurality of switches selectively couple respective strings of the light emitters in series to the input power to emit light when deactivated. The control circuit may deactivate a number of the switches to couple the respective light emitters to the input power in response to a sensed operational parameter of the input power. The control circuit may adjust the number of the switches deactivated in response to a change in the sensed operational parameter of the input power. A number of the light emitters may be coupled to the input power regardless of the sensed operational parameter of the input power.

Publication titled "Design for ESD Immunity" (Michel Mardiguian), Electro Static Discharge: Understand, Simulate, and Fix ESD Problems, Wiley, 2009, ProQuest Ebook, describes problems with electrostatic discharge and ways how to maintain shield integrity with metal housings.

US Patent Application US 2001/0035799 A1 "Circuit board device and design support device" describes a circuit board device that suppress with a small number of terminal elements unwanted irradiation originating between a power supply and a ground layer.

US Patent Description US 6,016,084 A "Method for connecting board with housing, and electronic instrument having connection structure according to the connecting method" relates to a printed circuit board connected with a series combination of components having the inductive nature or capacitive nature and resistive nature.

Publication titled "Power Supplies" (Williams Tim), The Circuit Designer's companion, 6 November 2004, Elsevier Science & Technology, ISBN: 978-0-7506-6370-0, pages 247-248 describes using Zener diodes for suppressions of surges and overvoltages.

A disadvantage of the known solutions is a problem with losses of power converted into heat which must be discharged outside LED systems and a susceptibility to overvoltage of electrical system comprising the LED system and electronic components.

The aim of the present invention is to provide an LED system with the three-phase power supply with a high efficiency.

According to the invention this task has been solved by an LED system with the threephase power supply, this task has been solved by features of claim 1.

Preferred configurations of the three-phase power supply and the LED system according to the invention are subject of dependent claims, and also have been described herein, and in particular will be described in conjunction with the figures.

The invention is disclosed with reference to the drawings, where Fig. 1 shows schematically a three-phase power-supply, especially for supplying LED system, Fig. 2 shows waveforms of a voltage on the respective power lines, a waveform of the voltage over time at an output of a six half-wave rectifier and currents waveforms of FETs, Fig. 3, 4, 5 show LED systems with an LED zero passive segment with a three-phase power supply, Fig. 6 shows a detailed LED system with an LED zero passive segment with a three-phase power supply, Fig. 7 shows a detailed LED system with an LED zero passive segment with a three-phase power supply and with an antistatic system, Fig. 8 shows an axonometric view of a part of a PCB with the processor of a control arrangement, Fig. 9 shows a part of a PCB with LEDs, Fig. 10 shows a waveform of a voltage over time at an output of a full-wave rectifier and a waveform of a voltage over time at an output of a six half-wave rectifier, and Fig. 11A - 11H show waveforms of a supply voltage and waveforms of an instantaneous current.

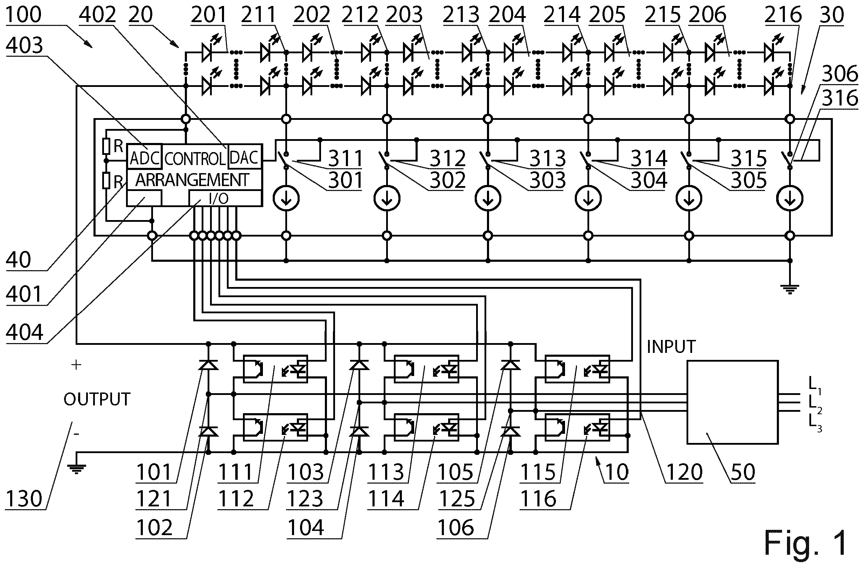

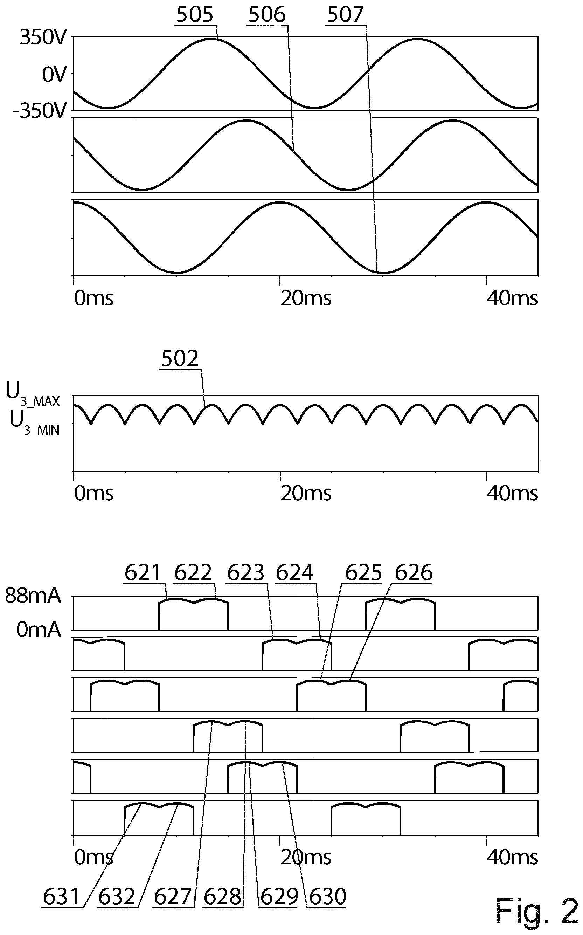

Figure 1 relates to an example not falling within the terms of the claimed invention. A three-phase power supply 10 or a power supply system with an input 120 and an output 130, being a part of an electrical system 100 connected to the three-phase alternating current (AC) power supply, presented in Fig. 1 and intended to supply LEDs system 20, is a system of three-phase rectifier bridge circuit which comprises rectifier diodes 101, 102, 103, 104, 105, 106. Two or pair of the rectifier diodes 101 and 102, 103 and 104, 105 and 106 are connected at a node or connection point. Each two diodes 101 and 102, 103 and 104, 105 and 106 are connected between two -U, +U poles of the output 130 of the direct current (DC) power supply system. Cathodes of rectifier diodes 101, 103, 105, connected with the rectifier diodes 102, 104, 106 at the connection point or node 121, 123, 125, are connected to the +U pole of the DC power supply system for supplying the electronic device, and anodes of second of the two diodes 102, 104, 106 are connected to the -U pole of the DC power supply system supplying the electronic device provided with a control arrangement. If a linear LED sequencer is used to build a high-power lighting system, for example over 1 kW, power losses in a passive rectifying diode can achieve significant values. In the unclaimed example shown in Fig. 1, version of an active diode rectifier additionally equipped with field-effect transistors (FETs) is presented. In this example, each of the rectifying diodes 101, 102, 103, 104, 105, 106 is connected directly in parallel and bypassed or shunted with one FET of a rectifying unit 111, 112, 113, 114, 115, 116, respectively, which is controlled, i.e. switched on and off by means of a control arrangement 40, comprising an analogue-to-digital converter ADC 403, a digital-to-analogue converter DAC 402 and a microcontroller 401, which provides a control signal to a gate of the appropriate FET through the input/output (Input/Output, I/O in short) 404. The FETs used in the three-phase power supply can be p-type channel or n-type. In the first period after switching on the power supply, only passive elements in a bridge rectifier, which are rectifier diodes 101, 102, 103, 104, 105, 106, are working. Once the control arrangement 40, in particular the microcontroller 401, detects stable power supply conditions and starts operation of elements of an LED sequencer 30, it starts at the same time to control over the FETs of rectifying units 111, 112, 113, 114, 115, 116 in the active rectifier. The FETs of rectifying units 111, 112, 113, 114, 115, 116 are switched on and carry electric current in the same direction as the rectifying diode bypassed by the FET when a specified voltage at the gate of a specified FET of rectifying units 111, 112, 113, 114, 115, 116 is obtained and serve as a shunting switch in the bridge rectifier. Thanks to the shunting of the rectifier diodes, the resistance of the system, comprising the rectifier diode and the FET, decreases. The switches based on the system of the FET of rectifying units 111, 112, 113, 114, 115, 116 and the LED are switched on according to the sequence shown in Fig. 2, which shows charts 505, 506, 507 of the wire power supply voltage for each of three phases $L_1$, $L_2$ and $L_3$ at the top and then shows a chart 502 of the voltage at the rectifier output in the middle, and then shows waveforms of currents from 621 to 632 in each of the switches at the bottom. Horizontal axes x are in the same scale to show a dependence over time in a more visible way. At the time when the current in a given switch is non-zero, the voltage controlling this switch has a high value, and the switch is switched on at a voltage $U_{3\_min}$, because the value of the control voltage is suitable to correctly switch on the given switch. At a given time, two complementary switches locking the power supply circuit are always switched on. The switches are switched on in the following pairs: 111 and 114, which is presented in charts 621 and 632, 114 and 115, which is presented in the charts 622 and 627, 115 and 112, which is presented in the charts 628 and 629, 112 and 113, which is presented in the charts 623 and 630, 113 and 116, which is presented in the charts 624 and 625, and 116 and 111, which is presented in charts 626 and 631, shown in Fig. 2. The switches in the example in Fig. 1 are switched at intervals of 10/3 ms = ~ 3.33 ms. Each switching is synchronised with the time of reaching the voltage $U_{3\_min}$, which corresponds to the value of the voltage $U_{3\_min}$ achieved at T/6 or 4T/6 of full sinusoidal waveform voltage in the full period T, wherein the value of the voltage $U_{3\_min}$ is equal to $(\sqrt{3}/2)U_{max}$.

However, after starting the system, when the microcontroller detects stable conditions of power supply, synchronises with the waveform of the voltage of the power supply and starts to control the switches in the active rectifier at the same time. This system allows elimination of additional electronic components. This way of switching on allows for safe activation of the system and minimization of energy losses on the rectifier components. The use of galvanic insulation between actuators, i.e. the FETs of rectifying units 111, 112, 113, 114, 115, 116 and the control system or the control arrangement 40, further increases the reliability of the entire solution.

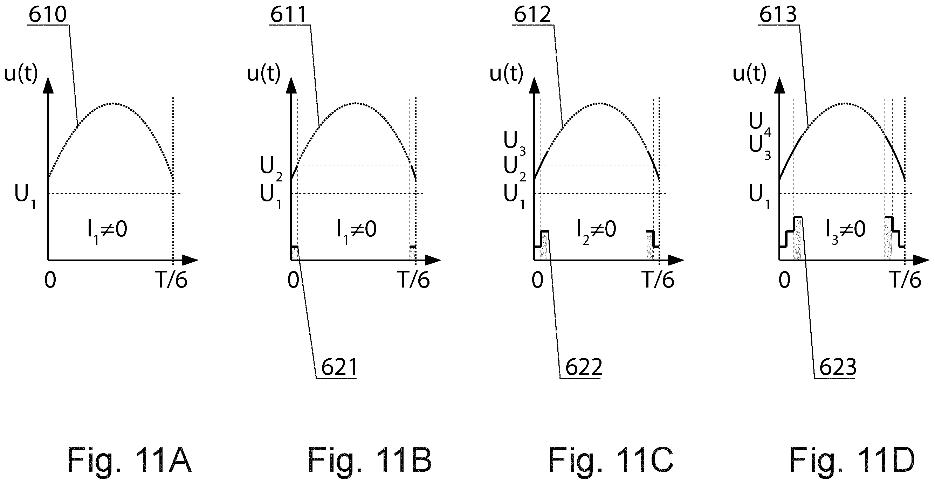

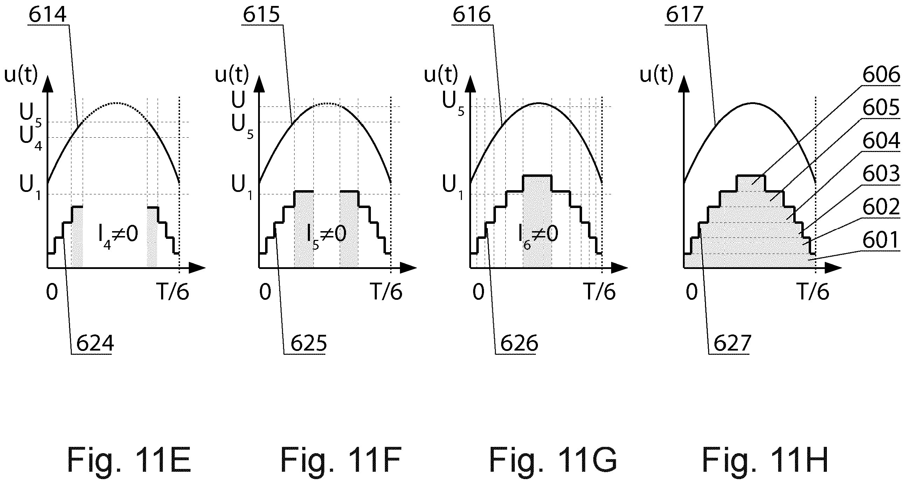

The three-phase power supply 10, presented in Fig. 1, can work with any electronic device, but in the example shown in Fig. 1, it serves to supply the LEDs system 20, especially segments 201, 202, 203, 204, 205, 206 of the LEDs system for illuminating devices. In one example each connecting node 211, 212, 213, 214, 215, 216 of LEDs, connects two adjacent segments of LEDs 201, 202, 203, 204, 205, 206, and is connected to a first end of respective switching system 301, 302, 303, 304, 305, 306, whose other end is connected to the -U pole. The switching systems 301, 302, 303, 304, 305, 306 are activated by control systems 311, 312, 313, 314, 315, 316 connected to the control arrangement 40 and controlled by the ripple DC voltage of the three-phase rectifier bridge circuit of six rectifying diodes and a predetermined value stored in the memory of the control arrangement 40, at which each LED from the switched on LEDs segments lights. The switching of exemplary segments 201, 202, 203, 204, 205, 206 of the LEDs system, as discussed in the description of Fig. 11A-11H, and further, if these are connected, is controlled by the control arrangement 40 using control systems 311, 312, 313, 314, 315, 316 of the LED sequencer 30, which activates by a DAC control system 402 switching systems 301, 302, 303, 304, 305, 306 of the LED sequencer 30, that outputs are connected to successive ends of segments 201, 202, 203, 204, 205, 206 of the LEDs system. The three-phase power supply 10 of Fig. 1 has the input 120, which is connected to the three-phase power supply line by means of a system 50 for correction of a passive power factor.

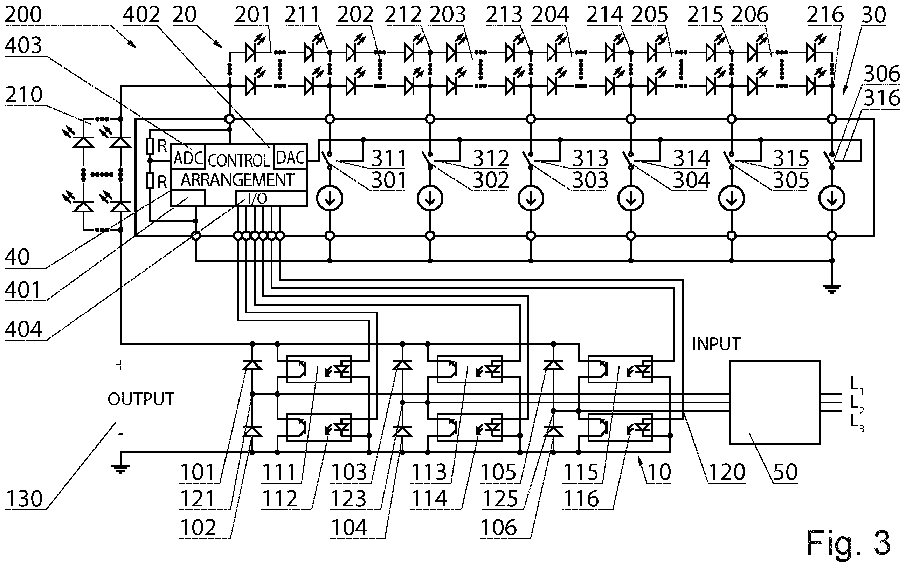

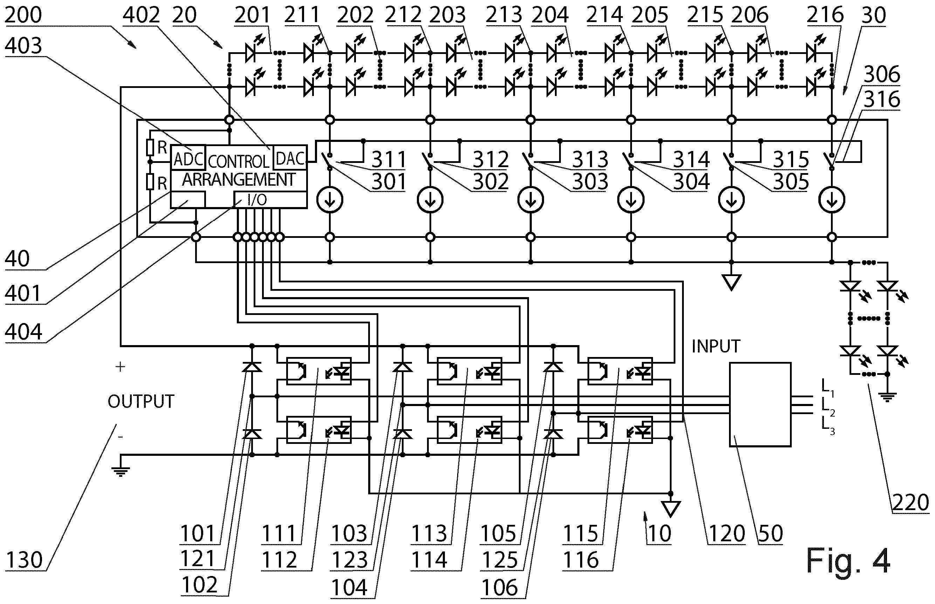

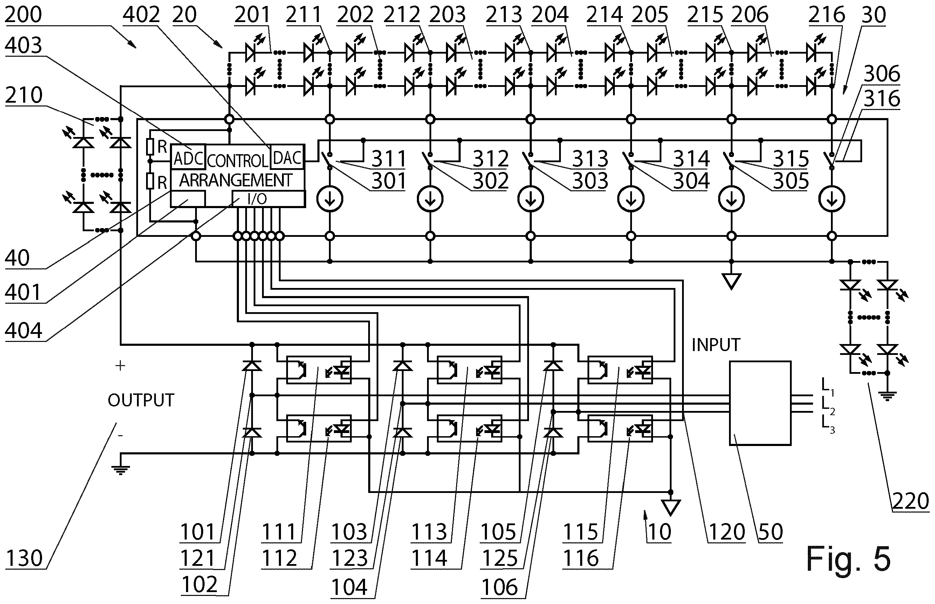

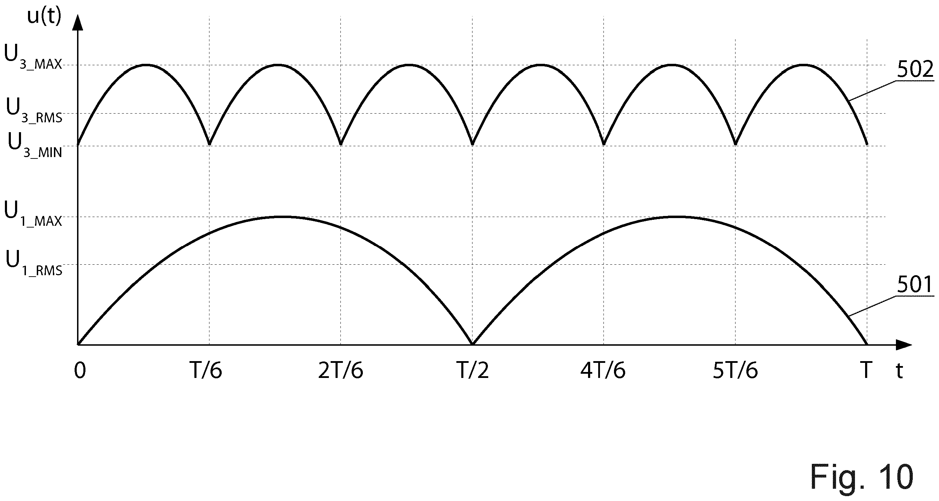

According to embodiments of the invention, an electrical system 200 with the LEDs system 20 with the three-phase power supply with the input 120 and the output 130 presented in Fig. 3, 4, 5 differs from the electrical system 100 with the LEDs system with the three-phase power supply of Fig. 1 in that the system of Fig. 3 additionally has a passive zero segment 210 of the LEDs situated in front of the segments 201, 202, 203, 204, 205, 206 of the LEDs system, the system of Fig. 4 additionally has a passive zero segment 220 of the LEDs situated behind the segments 201, 202, 203, 204, 205, 206 of the LEDs system, and the system of Fig. 5 additionally has two passive zero segments 210, 220 of the LEDs, situated in front and behind the segments 201, 202, 203, 204, 205, 206 of the LEDs system. The reference numerals indicated in Fig. 3, 4, 5 correspond to the reference numerals of the same components in Fig. 1. The number of LEDs in this segment is selected so as to put down on them the greatest possible value of the supply voltage. The voltage accumulated on the passive zero segment 210, 220 is equal to the minimum instantaneous level of the voltage achieved at the output 130 of the six half-wave rectifier 10, i.e. the voltage $U_{3\_MIN}$ as defined in Fig. 10. This solution allows to minimise the supply voltage of active components, which directly translates into a lower level of power losses.

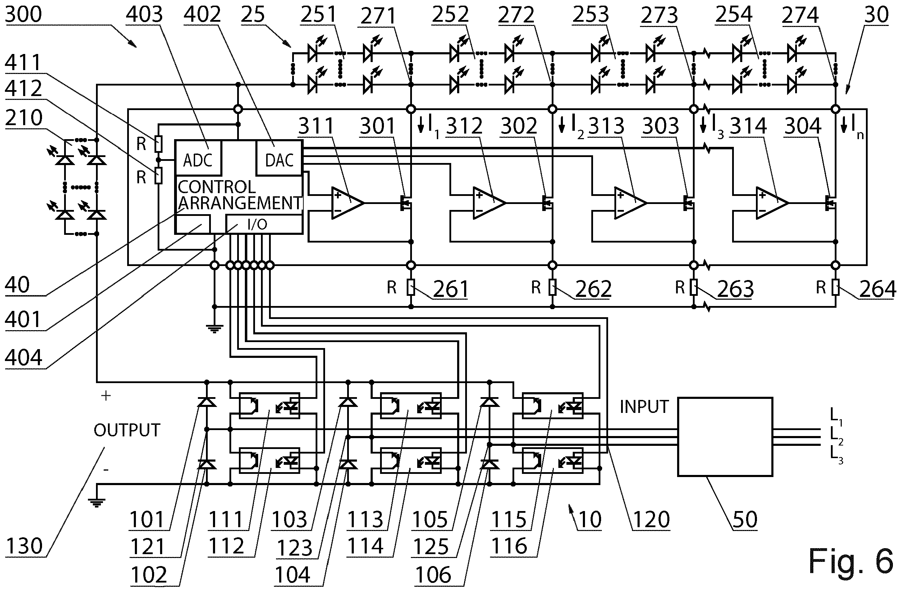

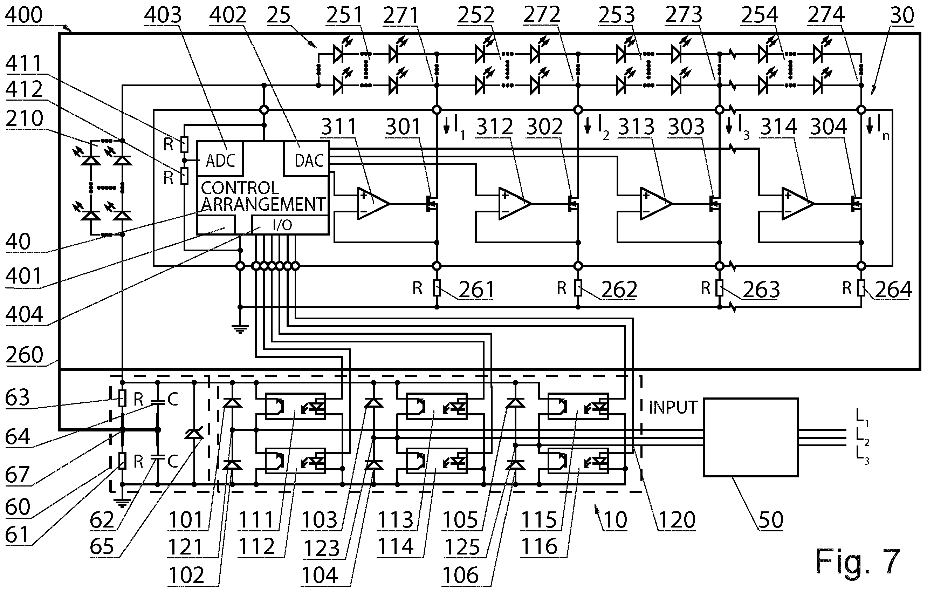

Fig. 6 shows a detailed electrical system 300 with LEDs system 25 with the passive zero segment 210 of LEDs and segments 251, 252, 253 with the three-phase power supply 10, with the input I 120 and the output O 130, wherein the n-th segment of the LEDs was marked with a number 254. In one embodiment, each connecting node 271, 272, 273, 274 of LEDs, at which are connected two adjacent segments of LEDs 251, 252, 253, 254, is connected to the first end of the switching system 301, 302, 303, 304, whereas the other end of the switching system 301, 302, 303, 304 is connected to the -U pole and activated by the control systems 311, 312, 313, 314, connected to the control arrangement 40 and controlled by the ripple DC voltage of the three-phase rectifier bridge circuit of six rectifying diodes and a predetermined value stored in the memory of the control arrangement 40, at which each LED from the switched on LEDs segments lights. The main component of the control arrangement 40 controlling the work of the entire electrical system 300 is the microcontroller 401 with built-in Random Access Memory (RAM) memory and Flash Memory (FLASH memory). The non-volatile memory of the microcontroller 401 comprises a program for executing a control algorithm, which is based on reading the instantaneous value of the supply voltage on the line +U using the built-in analogue to digital converter ADC 403 with a cooperating analogue system for voltage matching. The read voltage value is compared to pre-set threshold voltages, and on that basis, a decision concerning the current control of each of the LED segments, i.e. switching of specific switching systems 301, 302, 303, 304, is taken. Current sources, which are systems for stabilising the value of current rating regardless of changes in supply voltage and load conditions, controlling the current in each of the segments, are realized in the classical system with an operational amplifier. Each of the switching systems 301, 302, 303, 304 of the LED sequencer 30, activated by using the control systems 311, 312, 313, 314 of the LED sequencer 30 and controlled from an output of the amplifier, serves as a current amplifier. Current *Ii* supplying segment i 251, 252, 253, 254, from *i=1* to *i=n,* flows through a resistor Ri 261, 262, 263, 264, whose value is of the order 10 - 100 Ω (Ohm) at the voltage value $U_{DAC}$ of 0-3.3 V and causes the voltage drop across this resistor. Then *Ui* is the voltage, which is directed to an inverting input of the operational amplifier 311, 312, 313, 314 and is comparable with a reference voltage provided to a noninverting input from an output of the digital to analogue converter DAC 402. Each of the operational amplifiers 311, 312, 313, 314, by the nature of its function, strives to control an output voltage in such a way that the voltages at the inverting "-" and noninverting "+" input were equal. In this way, at a fixed resistor value *Ri, Ii* current can be determined using the following formula: *Ii* = $U_{DAC}/R_i$. The proposed solution in the form of linear current sources with a smoothly adjustable reference voltage allows for very flexible current control in all segments. The current in each segment can be set from zero to a maximum value by using software. No hardware modifications are required. This design of the system allows for the execution of any smooth transitions from switching off one segment to switching on the next segment. In the electrical system 300, the value of resistors R 411, 412 forming a voltage divider is selected to decrease the supply voltage of the maximum value, for example 570 V, to the range of the input dynamics of the ADC converter 403, being equal from 0 V to 3.3 V, for an exemplary value of the divider 1:200 and exemplary values of the resistors R 411, 412, respectively, 200 KΩ (kOhm) and 1 KΩ (kOhm). A connection point of the resistors R 411, 412 is linked to the ADC converter 403 whereas a free end of resistor R 411 is connected to the connection point of segment 251 of LEDs and the passive zero segment 210 of LEDs and whereas a free end of resistor R 412 is connected to the -U pole of the DC power supply system. The voltage dividers formed by resistors R 411, 412 shown in Fig. 6 and in Fig. 7 are identical.

An electrical system 400 of Fig. 7 with the LEDs system 25 with the passive zero segment 210 of LEDs and the segments 251, 252, 253 with the three-phase power supply 10 with the input I 120 and the output O 130, wherein the n-th segment of the LEDs was marked with the number 254, compared to the system 300 of Fig.

6, additionally has a protection circuit or a protection system 60 against electrostatic discharges with a spatial screen 260, wherein the active part of the screen is marked with a bold line, whose paths are extended around all sensitive to electrostatic discharges components of the electrical system, especially around the linear LED sequencer 30, the LEDs system 25 and the processor of the control arrangement 40, arranged on a PCB. The reference numerals indicated in Fig. 7 correspond to the reference numerals of the same components in Fig. 6. The spatial screen 260 typically has numerous metal shielding layers, which can be connected to each other by using electrical connections, also known as grommets, and at least two RC parallel circuits 61, 62 and 63, 64 or dividers $R_{61}/R_{63}$ and $C_{62}/C_{64}$. The number of parallel RC circuits may even be equal to the number of metal shielding layers or higher if the metal shielding layers have large surfaces. Between the metal shielding layers, at least one inner layer with electrical circuits connecting the systems and electronic components may be located. In the solution shown in Fig. 7, one metal shielding layer of a spatial system is connected with the main parallel RC circuit 61, 62, which is connected to one of the -U, +U poles, in this case with the - U pole, of the power supply system 10. Another metal shielding layer is connected with the additional parallel RC circuit 63, 64, which is connected to the other -U, +U pole, in this case with the +U pole, of the power supply system 10. The terms "main" and "additional" may be used interchangeably in relation to the parallel RC circuits, which are the circuits comprising at least one resistor R and at least one capacitor C. In one embodiment, the main parallel RC circuit 61, 62 is connected with the additional parallel RC circuit 63, 64 at the connection point of RC 67, which is connected to one of the metal shielding layers. Optionally, the system 60 of protection against electrostatic discharges comprises a rectifier system 65, which may be a Zener diode, wherein one of the terminals is connected to one of the -U, +U poles of the power supply system, which is connected for example to the main parallel RC circuit 61, 62. The second terminal of the threshold rectifier system, for example the Zener diode, is connected to the remaining -U, +U pole of the power supply system, which is for example connected to the auxiliary parallel RC circuit 63, 64. The rectifier system 65 in the system 60 of protection against electrostatic discharges is connected in the direction of conducting the electrical current from the negative pole -U of the board power supply system to the positive pole +U of the board supply system and is used in order to remove the excess of negative charges accumulated on the negative pole -U. The spatial screen 260 is a low-impedance circuit for electrostatic discharge. Thus, all charges and discharges, which will be caught by the spatial protective screen, are short circuited by means of parallel RC circuits and then are discharged to the power supply line +U and -U and/or are reset by the rectifier system 65, in particular by the Zener diode. All components of the electrostatic protection have parameters fitted in a way to withstand standard surge voltages occurring during normal use.

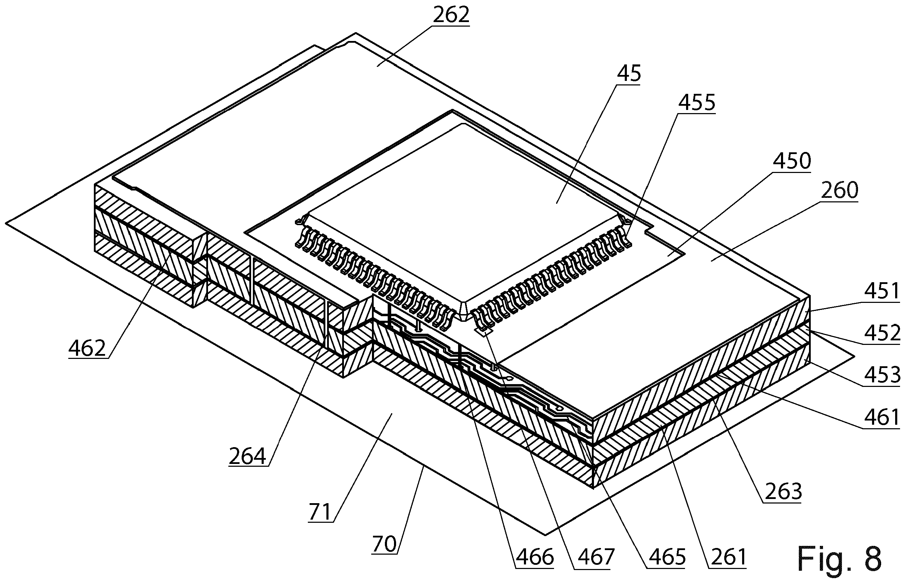

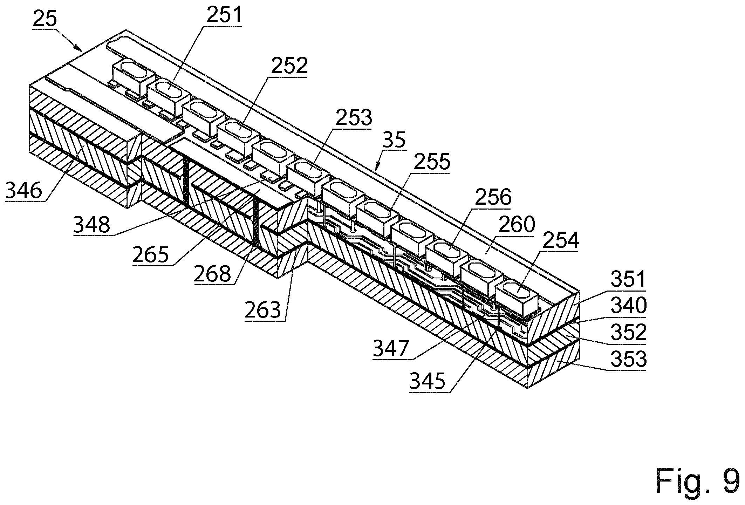

Fig. 8 shows an axonometric view of a part of a PCB with a processor 45 of the control arrangement 40, which can be a part of one PCB together with a fragment of a board of Fig. 9. The PCB 450 is attached to a housing 70 or to a structural element of the housing 70 with a contact surface 71, which is in contact with a bottom surface of the PCB 450 or another printed circuit board. The board 450 is a multilayer board and comprises a bottom metal shielding layer 263, which is a part of the board 450 with the processor 45 directed to the contact surface 71 and the housing 70 or the structural element of the housing 70, from which the bottom shielding layer 263 is insulated by means of a bottom insulating layer 453. In addition, the board 450 has at least one additional metal shielding layer 261, for example copper or silver shielding layer, which forms together with the bottom metal shielding layer 263, for example copper or silver shielding layer, the shielding system 260, which further comprises another metal shielding layer 262, whose layers are connected by using electrical connections 264, also known as grommets. Between the additional metal shielding layer 261 and the bottom metal shielding layer 263 there is at least one inner layer 461, 462 with electrical circuits, insulated from the additional metal shielding layer 261 with a top insulating layer 451 and insulated from the bottom metal shielding layer 263 with a central insulating layer 452. The electrical circuits located in the inner layer 461, 462 have conductive paths 465, which are connected with electronic elements or components of devices mounted on the board 450, for example with pins 455 of the processor 45, by using additional connections 466, which are connected to connecting boards 467, called pads.

In turn, Fig. 9 shows a fragment of a PCB 35 with the system 25 of LEDs with the segments 251, 252, 253, 254, 255, 256 of LEDs, which comprises the bottom metal shielding layer 263, which faces the contact surface of the housing, from which the bottom shielding layer 263 is insulated by an insulating layer 353. The bottom metal shielding layer 263 is a part of the spatial screen 260, which also comprises at least one additional metal shielding layer 265, whose layers are connected by using an electrical connector 268, also known as a grommet, and between which there is at least one inner layer 340, 346 with electrical circuits, which is insulated from the bottom shielding layer 263 by using a central insulating layer 352 and from the additional shielding layer 265 by using a top insulating layer 351, connecting the LEDs from the segments 251, 252, 253, 254, 255, 256 with the power supply systems and with the LED control systems. The electrical circuits connecting the LEDs have conductive paths 347 made of a conductive metal, for example of copper and/or silver and/or a metal with similar properties, which are connected by the loop through joints 345 with connecting boards 348, also called pads, to which are soldered contact plates or leads of LEDs.

A voltage waveform 501 over time at an output of a full-wave rectifier and a voltage waveform 502 over time at an output of the six half-wave rectifier are presented in Fig. 10. In this figure, a minimum voltage value in the case of the three-phase U3_MIN, a maximum voltage value in the case of the three-phase U3_MAX, an effective voltage value in the case of the three-phase $U_{3\_RMS}$, a maximum voltage value in the case of the one-phase $U_{1\_MAX}$ and an effective voltage value in the case of the one-phase $U_{1\_RMS}$ were presented. In the case of the six half-wave rectifier, the main difference compared to a rectified one-phase voltage is the lack of voltage reduction to zero level. The minimum voltage level which can be achieved equals approximately 480 V at the supply of European energy network $3 \times 400$ VAC/50 Hz. On the basis of the voltage shape, two components: a contestant component and a variable component, can be seen. The presence of the constant voltage at a certain level allows for continuous lighting of some of the supplied LEDs. The second part of the rectified voltage is a variable waveform with an amplitude of about 70 V and a frequency of 300 Hz. This is the usable voltage range on which the work dynamics of a sequential control system is built or based. The combination of two features above, namely the lack of voltage reduction below a certain minimum value and the high frequency of the variable component, allows to obtain a stable luminous flux with no noticeable flickering/flashing of light.

A method of switching on the system shown in Fig. 3 and supplied with the three-phase voltage, and comprising six active segments 201, 202, 203, 204, 205, 206 and one passive segment 210, is presented in Fig. 11A-11H by using voltage waveforms 610, 611, 612, 613, 614, 615, 616, 617 and current waveforms 621, 622, 623, 624, 625, 626, 627. In these figures, a thin line represents the supply voltage waveforms in respective LEDs segments, and a bold line represents the waveforms of instantaneous current flowing through all linear current sources. The instantaneous current is at the same time the total current supplying the zero segment 210. Current sources are added sequentially in such a way that only one of them is working at a given moment. The exception is a transitional state between switching off one source and switching on another source, when the current is modulated by a linear function, and two sources can operate simultaneously. The current of each successive source is always larger than the previous one in order to keep the average current value for each segment at a constant level and thereby to compensate for the shorter lighting time of a given segment. The waveforms shown suggest that an activating threshold $U_1$ for the first segment 201 is set with a suitable margin in such a way that the instantaneous value of the supply voltage is always above this threshold, for example 470 V. Thus, the first segment 201 is always supplied by a source $I_1$, while the switching system 301 is switched on and lights continuously, at the same time supplying the zero segment. Till the point where the power supply does not reach a threshold $U_2$, only the first segment 201 and the zero segment 210 light. After crossing the threshold $U_2$, the second segment 202 is appended by activating a source $I_2$ by switching on the switching system 302 and switching off the switching system 301. At that moment, only three segments light. Then, after crossing a threshold $U_3$, the third segment 203 is supplied by switching on a source $I_3$. Then, in the same way, after crossing successive voltage thresholds, successive segments are added until the voltage exceeds a threshold $U_6$. After the last segment 206 is switched on, there is still a certain voltage margin to the maximum value, also called a peak value, which is accumulated on active control means, thereby converting or transforming the excessive power directly into Joule's heat. The chart in Fig. 11 H shows a summary shape in a form of rectangles 601, 602, 603, 604, 605, 606 of the current supplying all the segments of LEDs obtained by summing the instantaneous currents 621, 622, 623, 624, 625, 626, 627 for all sources from $I_1$ to $I_6$. The use of zero segment 210 and an appropriate selection of the switching thresholds of individual segments and also their quantity allows for obtaining the optimal operation of the system at minimum power losses. The excess of power is also deposited in the active elements in transitional moments between successive working thresholds. Thereby, increasing the number of active segments has a beneficial impact on reducing total power loss. At the same time, it is possible to better fit the current shape to the shape of the supply voltage, which contributes to a decrease in the level of harmonic distortions emitted by the system to the power grid. Without the use of sequences, all voltage excess would be transformed into heat, while in the sequencer system, the excessive voltage is gradually deposited on successive levels of lighting LEDs, so that the electrical efficiency of the whole system is high. In one embodiment of the invention the thresholds $U_1$ to $U_i$ of voltages, for example to $U_6$, at which successive LEDs segments are activated, are determined experimentally and have the values at which each LED from the switched on LEDs segments lights.

The present invention has been shown in selected embodiments. These embodiments, however, do not limit the invention. It is obvious that modifications can be made without departing from the scope of the appended claims. The presented embodiments do not exhaust the possibilities of application of embodiments of the present invention.

While the technical concept presented herein has been depicted, described, and has been defined with reference to particular preferred embodiments, such references and examples of implementation in the foregoing specification do not imply any limitation on the concept. The presented preferred embodiments are exemplary only, and are not exhaustive of the scope of the technical concept presented herein.

## Claims

1. An LED system (20, 25) comprising

   series connected segments (201, 202, 203, 204, 205, 206, 251, 252, 253, 254) of LEDs with switching systems (301, 302, 303, 304, 305) and control systems (311, 312, 313, 314, 315);
   a three-phase power supply having
   a rectifier bridge circuit comprising six rectifying diodes (101, 102, 103, 104, 105, 106) arranged to form a DC power supply system, whereby the six rectifying diodes comprise a unit of two diodes for each phase, the two diodes connected in series with a connection point (121, 123, 125), to which a wire voltage line may be connected, and whereby each unit of two rectifying diodes is connected between two poles +U, -U, forming an output (130) of the DC power supply system, wherein the cathode of the two rectifying diodes not connected to the connection point (121, 123, 125) is connected to the +U pole of the DC power supply system and the anode of the two rectifying diodes (101, 102, 103, 104, 105, 106) not connected to the connection point (121, 123, 125) is connected to the -U pole of the DC power supply system;
   a control arrangement (40) comprising a control microcontroller (401);
   a rectifying unit (111, 112, 113, 114, 115, 116) having field-effect transistors, FETs, whereby each rectifying diode (101, 102, 103, 104, 105, 106) of the rectifier bridge circuit is shunted with one of the FETs of the rectifying unit (111, 112, 113, 114, 115, 116), each FET having a gate linked to an output of the control arrangement (40), which is configured to switch the FETs (101, 102, 103, 104, 105, 106) in pairs in synchronisation with the time at which the voltage of the output (130) of the DC power system reaches U3min, which is equal to $\sqrt{3}/2$ times the maximum voltage at the output (130) of the DC power supply system, such that each FET of the rectifying unit (111, 112, 113, 114, 115, 116) carries electric current in the same direction as the rectifying diode that it is arranged to bypass and allows a decrease in the electrical energy loss of the rectifying diode bypassed by the FET;
   wherein
   the LED segments comprise one passive zero segment (210, 220) connected to the +U pole or the -U pole or two passive zero segments (210, 220), one of the two passive zero segments (210) being connected to the +U pole and the other (220) being connected to the - U pole, whereby the passive zero segment/segments (210, 220) is/are configured such that in operation the total voltage accumulated on it/them is equal to $U_{3min}$;
   each LED connection point (211, 212, 213, 214, 215, 271, 272, 273, 274) connecting two adjacent segments of LEDs (201, 202, 203, 204, 205, 251, 252, 253, 254) is connected to a first end of a respective switching system (301, 302, 303, 304, 305), whereas the other end of the respective switching system (301, 302, 303, 304, 305) is connected to the -U pole, or, where a passive zero segment (220) is connected to the -U pole, to the connection point between said passive zero segment and the adjacent LED segment; the switching system is arranged to serve as a current amplifier and to be activated and controlled by a respective control system (311, 312, 313, 314, 315, 316), which is arranged to be controlled according to the the ripple DC voltage of the rectifier bridge circuit by the control arrangement (40), which has determined values at which each LED segment emits light stored in memory, whereby the determined value for activating the first segment is set with a suitable margin in such a way that the first segment and the passive zero segment or segments light continuously;
   the LED system (20, 25) comprises a voltage divider formed by resistors (R 411, 412) and configured to decrease a voltage to a range of the input dynamics of an ADC converter (403) comprised in the control arrangement (40), (400), whereby the connection point between the resistors (R411, 412) is connected to the ADC converter (403) and the voltage divider is connected between the +U or -U pole and the passive zero segment (210, 220) connected to the other pole, or, where there are two passive zero segments (210, 220), between the two passive zero segments (210, 220).

2. The LED system according to claim 1, wherein the passive zero segment or segments comprise at least one LED or an arrangement or unit with at least two LEDs connected in parallel or/and in series.

3. The LED system according to claim 2 wherein the LED system comprises an LED printed circuit board, PCB (35), and the LED segments are arranged on the PCB (35).

4. The LED system according to claim 3 wherein the LED PCB (450) is provided with metal shielding layers forming a shield (260), whereby between the metal shielding layers are placed electrical circuits and electronic components of the LED system and/or at least one inner layer comprising electrical circuits to connect the electrical circuits and electronic components with the LED segments and a protecting unit connected between the metal shielding layers and configured to protect the electrical circuits and electronic components and the LED segments against damage caused by electrostatic discharges.

5. The LED system according to claim 4 **characterized in that** one of the metal shielding layers of the LED PCB (450) is a lower metal layer (263) arranged to be insulated from any contact surface of a housing (70) or housing structural elements.

## Patentansprüche

1. Ein LED-System (20, 25) umfassend

   in Reihe geschaltete Segmente (201, 202, 203, 204, 205, 206, 251, 252, 253, 254) von LEDs mit Schaltsystemen (301, 302, 303, 304, 305) und Steuersystemen (311, 312, 313, 314, 315); eine dreiphasige Stromversorgung mit

   einer Gleichrichterbrückenschaltung, die sechs Gleichrichterdioden (101, 102, 103, 104, 105, 106) umfasst, die dazu angeordnet sind, ein Gleichstromversorgungssystem zu bilden, wobei die sechs Gleichrichterdioden eine Einheit aus zwei Dioden für jede Phase umfassen und die zwei Dioden in Reihe mit einem Verbindungspunkt (121, 123, 125) geschaltet sind, mit dem eine Nennspannungsleitung verbunden werden kann, und wobei jede Einheit aus zwei Gleichrichterdioden zwischen zwei Polen +U, -U, die einen Ausgang (130) des Gleichstromversorgungssystems bilden, verbunden ist, wobei die Kathode der beiden Gleichrichterdioden, die nicht mit dem Verbindungspunkt (121, 123, 125) verbunden sind, mit dem +U-Pol des Gleichstromversorgungssystems verbunden ist und die Anode der beiden Gleichrichterdioden (101, 102, 103, 104, 105, 106), die nicht mit dem Verbindungspunkt (121, 123, 125) verbunden sind, mit dem -U-Pol des Gleichstromversorgungssystems verbunden ist; eine Steueranordnung (40), die einen Steuermikrocontroller (401) umfasst; eine Gleichrichtereinheit (111, 112, 113, 114, 115, 116) mit Feldeffekttransistoren, FETs, wobei jede Gleichrichterdiode (101, 102, 103, 104, 105, 106) der Gleichrichterbrückenschaltung mit einem der FETs der Gleichrichtereinheit (111, 112, 113, 114, 115, 116) parallelgeschaltet ist, wobei jeder FET ein mit einem Ausgang der Steueranordnung (40) verbundenes Gate aufweist, das dazu konfiguriert ist, die FETs (101, 102, 103, 104, 105, 106) paarweise synchron zu dem Zeitpunkt zu schalten, zu dem die Spannung des Ausgangs (130) des Gleichstromversorgungssystems $U_{3min}$ erreicht, was gleich dem $\sqrt{3}/2$-fachen der maximalen Spannung am Ausgang (130) des Gleichstromversorgungssystems ist, so dass jeder FET der Gleichrichtereinheit (111, 112, 113, 114, 115, 116) elektrischen Strom in derselben Richtung wie die zum Überbrücken angeordnete Gleichrichterdiode führt und eine Verringerung des elektrischen Energieverlusts der durch den FET überbrückten Gleichrichterdiode ermöglicht;

   wobei die LED-Segmente ein passives Nullsegment (210, 220), das mit dem +U-Pol oder dem -U-Pol verbunden ist, oder zwei passive Nullsegmente (210, 220) umfassen, wobei eines der beiden passiven Nullsegmente (210) mit dem +U-Pol und das andere (220) mit dem -U-Pol verbunden ist, wobei das passive Nullsegment/die passiven Nullsegmente (210, 220) derart konfiguriert ist/sind, dass im Betrieb die daran akkumulierte Gesamtspannung gleich $U_{3min}$ ist; jeder LED-Verbindungspunkt (211, 212, 213, 214, 215, 271, 272, 273, 274), der zwei benachbarte Segmente von LEDs (201, 202, 203, 204, 205, 251, 252, 253, 254) verbindet, mit einem ersten Ende eines jeweiligen Schaltsystems (301, 302, 303, 304, 305) verbunden ist, während das andere Ende des jeweiligen Schaltsystems (301, 302, 303, 304, 305) mit dem -U-Pol verbunden ist oder, wenn ein passives Nullsegment (220) mit dem -U-Pol verbunden ist, mit dem Verbindungspunkt zwischen dem passiven Nullsegment und dem benachbarten LED-Segment verbunden ist; das Schaltsystem dazu angeordnet ist, als Stromverstärker zu dienen und durch ein jeweiliges Steuersystem (311, 312, 313, 314, 315, 316) aktiviert und gesteuert wird, das so angeordnet ist, dass es entsprechend der Welligkeitsgleichspannung der Gleichrichterbrückenschaltung durch die Steueranordnung (40) gesteuert wird, die bestimmte Werte hat, bei denen jedes LED-Segment Licht ausstrahlt, und die in einem Speicher gespeichert sind, wobei der bestimmte Wert zum Aktivieren des ersten Segments mit einem geeigneten Spielraum derart eingestellt ist, dass das erste Segment und das passive Nullsegment oder die passiven Nullsegmente kontinuierlich leuchten; das LED-System (20, 25) einen Spannungsteiler umfasst, der durch Widerstände (R411, 412) gebildet wird und dazu konfiguriert ist, eine Spannung auf einen Bereich der Eingangsdynamik eines in der Steueranordnung (40) umfassten ADC-Wandlers (403) zu verringern, wobei der Verbindungspunkt zwischen den Widerständen (R411, 412) mit dem ADC-Wandler (403) verbunden ist und der Spannungsteiler zwischen dem +U- oder -U-Pol und dem mit dem anderen Pol verbundenen passiven Nullsegment (210, 220) verbunden ist, oder, wenn es zwei passive Nullsegmente (210, 220) gibt, zwischen den beiden passiven Nullsegmenten (210, 220) verbunden ist.

2.  Das LED-System nach Anspruch 1, wobei das passive Nullsegment oder die passiven Nullsegmente mindestens eine LED oder eine Anordnung oder Einheit mit mindestens zwei parallel oder/und in Reihe geschalteten LEDs umfassen.

3.  Das LED-System nach Anspruch 2, wobei das LED-System eine LED-Leiterplatte, PCB (35), umfasst und die LED-Segmente auf der PCB (35) angeordnet sind.

4.  Das LED-System nach Anspruch 3, wobei die LED-PCB (450) mit metallischen Abschirmungsschichten versehen ist, die eine Abschirmung (260) bilden, wobei zwischen den metallischen Abschirmungsschichten elektrische Schaltungen und elektronische Komponenten des LED-Systems und/oder mindestens eine, elektrische Schaltungen umfassende, innere Schicht, um die elektrischen Schaltungen und elektronischen Komponenten mit den LED-Segmenten zu verbinden, und eine Schutzeinheit, die zwischen den metallischen Abschirmungsschichten verbunden ist und dazu konfiguriert ist, die elektrischen Schaltungen und elektronischen Komponenten und die LED-Segmente vor Schäden zu schützen, die durch elektrostatische Entladungen verursacht werden, angeordnet sind.

5.  Das LED-System nach Anspruch 4, **dadurch gekennzeichnet, dass** eine der metallischen Abschirmschichten der LED-PCB (450) eine untere Metallschicht (263) ist, die so angeordnet ist, dass sie von jeder Kontaktfläche eines Gehäuses (70) oder Gehäusestrukturelementen isoliert ist.

**Revendications**

1.  Un système de diodes électroluminescentes DEL (20, 25) comprenant

des segments (201, 202, 203, 204, 205, 206, 251, 252, 253, 254) connectés en série de DEL avec des systèmes de commutation (301, 302, 303, 304, 305) et des systèmes de commande (311, 312, 313, 314, 315);
une alimentation électrique triphasée ayant

un circuit de pont redresseur comprenant six diodes de redressement (101, 102, 103, 104, 105, 106) agencées pour former un système d'alimentation électrique à courant continu, CC, moyennant quoi les six diodes de redressement comprennent une unité de deux diodes pour chaque phase, les deux diodes étant connectées en série à un point de connexion (121, 123, 125), auquel une ligne de tension filaire peut être connectée, et moyennant quoi chaque unité de deux diodes de redressement est connectée entre deux pôles +U, -U, formant une sortie (130) du système d'alimentation électrique CC, la cathode des deux diodes de redressement non connectées au point de connexion (121, 123, 125) étant connectée au pôle +U du système d'alimentation électrique CC et l'anode des deux diodes de redressement (101, 102, 103, 104, 105, 106) non connectées au point de connexion (121, 123, 125) étant connectée au pôle -U du système d'alimentation électrique CC;
un agencement de commande (40) comprenant un microcontrôleur de commande (401);
une unité de redressement (111, 112, 113, 114, 115, 116) ayant des transistors à effet de champ, FET, moyennant quoi chaque diode de redressement (101, 102, 103, 104, 105, 106) du circuit de pont redresseur est shuntée avec l'un des FET de l'unité de redressement (111, 112, 113, 114, 115, 116), chaque FET ayant une grille reliée à une sortie de l'agencement de commande (40), qui est configuré pour commuter les FET (101, 102, 103, 104, 105, 106) par paires en synchronisation avec l'instant auquel la tension de la sortie (130) du système d'alimentation électrique CC atteint $U_{3min}$, qui est égale à $\sqrt{3}/2$ fois la tension maximale à la sortie (130) du système d'alimentation électrique CC, de sorte que chaque FET de l'unité de redressement (111, 112, 113, 114, 115, 116) transporte un courant électrique dans le même sens que la diode de redressement qu'il est agencé pour contourner et permet une diminution de la perte d'énergie électrique de la diode de redressement contournée par le FET;
dans lequel les segments de DEL comprennent un segment à zéro passif (210, 220) connecté au pôle +U ou au pôle -U ou deux segments à zéro passifs (210, 220), l'un des deux segments à zéro passifs (210) étant connecté au pôle +U et l'autre (220) étant connecté au pôle -U, moyennant quoi le(s) segment(s) à zéro passif(s) (210, 220) est/sont configuré(s) de telle sorte qu'en fonctionnement, la tension totale accumulée sur celui-ci/ceux-ci est égale à $U_{3min}$; chaque point de connexion de DEL (211, 212, 213, 214, 215, 271, 272, 273, 274) reliant deux segments adjacents de DEL (201, 202, 203, 204, 205, 251, 252, 253, 254) est connecté à une première extrémité d'un système de commutation respectif (301, 302, 303, 304, 305), tandis que l'autre extrémité du système de commutation respectif (301, 302, 303, 304, 305) est connectée au pôle -U, ou, lorsqu'un segment à zéro passif (220) est connecté au pôle - U, au point de connexion entre ledit segment à zéro passif et le segment de DEL adjacent; le système de commutation est agencé pour servir d'amplificateur de courant et pour être activé et commandé par un système de commande respectif (311, 312, 313, 314, 315, 316), qui est agencé pour être commandé selon la tension CC d'ondulation du circuit de pont redresseur par l'agencement de commande (40), qui a des valeurs déterminées auxquelles chaque segment de DEL émet de la lumière stockées en mémoire, moyennant quoi la valeur déterminée pour activer le premier segment est réglée avec une marge appropriée de telle sorte que le premier segment et le ou les segments à zéro passifs s'allument en continu;

le système de DEL (20, 25) comprend un diviseur de tension formé par des résistances (R411, 412) et configuré pour diminuer une tension à une plage de la dynamique d'entrée d'un convertisseur analogique-numérique, CAN, (403) compris dans l'agencement de commande (40), moyennant quoi le point de connexion entre les résistances (R411, 412) est connecté au convertisseur CAN (403) et le diviseur de tension est connecté entre le pôle +U ou -U et le segment à zéro passif (210, 220) connecté à l'autre pôle, ou, lorsqu'il y a deux segments à zéro passifs (210, 220), entre les deux segments à zéro passifs (210, 220).

2. Le système de DEL selon la revendication 1, dans lequel le ou les segments à zéro passifs comprennent au moins une DEL ou un arrangement ou une unité avec au moins deux DEL connectées en parallèle ou/et en série.

3. Le système de DEL selon la revendication 2, dans lequel le système de DEL comprend une carte de circuits imprimés, PCB, de DEL (35), et les segments de DEL sont disposés sur la PCB (35).

4. Le système de DEL selon la revendication 3, dans lequel la PCB de DEL (450) comporte des couches de blindage métalliques formant un blindage (260), moyennant quoi, entre les couches de blindage métalliques, sont placés des circuits électriques et des composants électroniques du système de DEL et/ou au moins une couche interne comprenant des circuits électriques pour connecter les circuits électriques et les composants électroniques aux segments de DEL et une unité de protection connectée entre les couches de blindage métalliques et configurée pour protéger les circuits électriques et les composants électroniques et les segments de DEL contre un endommagement causé par des décharges électrostatiques.

5. Le système de DEL selon la revendication 4, **caractérisé par le fait que** l'une des couches de blindage métalliques de la PCB de DEL (450) est une couche métallique inférieure (263) agencée pour être isolée de n'importe quelle surface de contact d'un boîtier (70) ou d'éléments structuraux de boîtier.

Fig. 1

EP 2 840 693 B1

Fig. 2

Fig. 3

Fig. 4

Fig. 5

EP 2 840 693 B1

16

Fig. 6

EP 2 840 693 B1

Fig. 7

Fig. 8

Fig. 9

EP 2 840 693 B1

Fig. 10

EP 2 840 693 B1

Fig. 11A          Fig. 11B          Fig. 11C          Fig. 11D

EP 2 840 693 B1

Fig. 11E        Fig. 11F        Fig. 11G        Fig. 11H

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011014450 A
- US 2010164409 A1
- WO 2012142495 A1
- US 20130181646 A1
- WO 2013011422 A1
- EP 1347564 A2
- US 2013026931 A1
- US 2010308739 A1
- US 2013207557 A1
- US 2009230883 A1
- US 2012104952 A1
- US 2010123403 A1
- US 20010035799 A1
- US 6016084 A

**Non-patent literature cited in the description**

- Advanced Materials and Design for Electromagnetic Interference Shielding. **XINGCUN COLIN TONG.** 7 Board-Level Shielding Materials and Components. CRC Press
- Electro Static Discharge: Understand, Simulate, and Fix ESD Problems. **MICHEL MARDIGUIAN.** Design for ESD Immunity. Wiley, 2009
- Power Supplies. **WILLIAMS TIM.** The Circuit Designer's companion. Elsevier Science & Technology, 06 November 2004, 247-248